## Europäisches Patentamt

## European Patent Office

## Office européen des brevets

(19)

(11) Veröffentlichungsnummer: **0 100 534**
**A2**

(12) # EUROPÄISCHE PATENTANMELDUNG

(21) Anmeldenummer: 83107459.6

(22) Anmeldetag: 28.07.83

(51) Int. Cl.³: **H 04 L 11/00**

(30) Priorität: 30.07.82 DE 3228555

(43) Veröffentlichungstag der Anmeldung:
15.02.84 Patentblatt 84/7

(84) Benannte Vertragsstaaten:
AT CH IT LI SE

(71) Anmelder: SIEMENS AKTIENGESELLSCHAFT
Berlin und München Wittelsbacherplatz 2
D-8000 München 2(DE)

(72) Erfinder: Albert, Klaus, Dipl.-Phys.
Eichfeldstrasse 4
D-8033 Krailling(DE)

(72) Erfinder: Schröder, Eckhard, Dipl.-Ing.
Irschenhausener Strasse 17
D-8000 München 70(DE)

(54) Schaltungsanordnung zur Aufnahme und Weiterleitung von mit relativ hoher Geschwindigkeit auftretenden Datensignalen in einem Datenvermittlungsnetz.

(57) Bei einer an eine Datenvermittlungsanlage anschließbaren Koppeleinrichtung (K) zur Aufnahme von auf Hochgeschwindigkeits-Zubringerleitungen (NKan1 bis NKanx) auftretenden Datensignalen und Weiterleitung dieser Datensignale über Hochgeschwindigkeits-Abnehmerleitungen (NKab1 bis NKabx) ist zur Vermittlung der Datensignale ein Durchschaltespeicher (DS) vorgesehen, der zum Adressieren seiner Speicherplätze und zum Wirksamschalten der in Frage kommenden Hochgeschwindigkeits-Abnehmerleitungen eingangsseitig mit einem Eingabecodierer (ECW) und ausgangsseitig mit einem Ausgabecodierer (ACW) verbunden ist. Der genannte Ausgabecodierer (ACW), der die an Hochgeschwindigkeits-Abnehmerleitungen weiterzuleitenden Datensignale in Form von mehrere Bitruppen umfassenden Datensignalzeichen zusammen mit diese Hochgeschwindigkeits-Abnehmerleitungen bezeichnenden Adressen bereitstellt, ist ausgangsseitig an einer Speicheranordnung (SSP) angeschlossen, welche den Hochgeschwindigkeits-Abnehmerleitungen individuell zugeordnete Speicherplätze aufweist, in die jeweils ein oder mehrere Datensignalzeichen einschreibbar sind. Die einzelnen Speicherplätze der Speicheranordnung (SSP) sind für die Weiterleitung der Datensignale in solche aufeinanderfolgende Adressierzyklen einbezogen, daß in aufeinanderfolgenden Adressierzyklen Bitgruppen aus den Speicherzellen des jeweiligen Speicherplatzes abgegeben werden.

FIG 1

0100534

SIEMENS AKTIENGESELLSCHAFT

Berlin und München

Unser Zeichen

VPA 82 P 1 6 0 6 E

Schaltungsanordnung zur Aufnahme und Weiterleitung von mit relativ hoher Geschwindigkeit auftretenden Datensignalen in einem Datenvermittlungsnetz

Die Erfindung betrifft eine Schaltungsanordnung zur Aufnahme von mit relativ hoher Geschwindigkeit auf Hochgeschwindigkeits-Zubringerleitungen auftretenden Datensignalen und zur Weiterleitung dieser Datensignale über Hochgeschwindigkeits-Abnehmerleitungen in einem wenigstens eine Zeitvielfach-Datenvermittlungsanlage umfassenden Datenvermittlungsnetz, in welchem jeder Zeitvielfach-Datenvermittlungsanlage eine gesonderte Koppeleinrichtung zugehörig ist, über die die genannten Datensignale vermittelt werden und die dazu von einer Steuereinrichtung ihrer Zeitvielfach-Datenvermittlungsanlage steuerbar ist, über welche im Zuge der jeweiligen Datensignalverbindung mit relativ niedriger Geschwindigkeit auftretende Signalisierungsinformationen vermittelt werden, wobei die Koppeleinrichtung einen Durchschaltespeicher mit den Hochgeschwindigkeits-Zubringerleitungen individuell zugeordneten Speicherplätzen aufweist, in die von der Steuereinrichtung der zugehörigen Zeitvielfach-Datenvermittlungsanlage jeweils eine Adresse einer für eine Datensignalaufnahme in Frage kommenden Hochgeschwindigkeits-Abnehmerleitung einschreibbar ist, und wobei im Zuge der Vermittlung von mit der hohen Geschwindigkeit auftretenden Datensignalen lediglich der der jeweiligen Hochgeschwindigkeits-Zubringerleitung zugeordnete Speicherplatz des Durchschaltespeichers angesteuert und durch Bereitstellung der in dem betreffenden Speicherplatz enthal-

Kzr 1 Gru / 10.07.1982

tenen Adresse die für eine Datensignalaufnahme in Frage
kommende Hochgeschwindigkeits-Abnehmerleitung wirksam
geschaltet wird.

Bei der vorstehend bezeichneten Schaltungsanordnung ist
der Durchschaltespeicher zur Adressierung seiner Speicherplätze am Ausgang eines Eingabecodierers angeschlossen, der
ausgangsseitig den mit ihm verbundenen Hochgeschwindigkeits-Zubringerleitungen entsprechende Adressensignale abzugeben vermag, und der Durchschaltespeicher ist ausgangsseitig mit dem Eingang eines Ausgabecodierers verbunden,
der auf eine Adressierung durch die von dem Durchschaltespeicher abgegebenen Adressen hin die für die Weiterleitung von Datensignalen zu benutzenden Hochgeschwindigkeits-Abnehmerleitungen wirksam zu schalten gestattet.

Aufgrund einer sich ständig ändernden Verkehrsbelastung
kann bei der vorstehend genannten Koppeleinrichtung die
Anzahl der gleichzeitig in Datensignalverbindungen einbezogenen Hochgeschwindigkeits-Zubringerleitungen und Hochgeschwindigkeits-Abnehmerleitungen stark variieren. Daraus
resultiert eine unterschiedliche dynamische Belastung der
Koppeleinrichtung, die sich insbesondere dadurch auswirkt,
daß die Weiterleitung der auf den einzelnen Hochgeschwindigkeits-Zubringerleitungen zeitlich nacheinander auftretenden Datensignale innerhalb der Koppeleinrichtung sich
unterschiedlich verzögert.

Es ist nun Aufgabe der vorliegenden Erfindung, die Schaltungsanordnung der eingangs genannten Art so auszubilden, daß
eine von der dynamischen Belastung der Koppeleinrichtung
unabhängige lückenlose Übertragung der Datensignale zu
den an Datensignalverbindungen beteiligten Hochgeschwindigkeits-Abnehmerleitungen möglich ist.

Gelöst wird die vorstehend aufgezeigte Aufgabe bei einer

0100534

Schaltungsanordnung der eingangs genannten Art erfindungsgemäß dadurch, daß der Ausgabecodierer, der die an Hochgeschwindigkeits-Abnehmerleitungen weiterzuleitenden Datensignale in Form von mehrere Bitgruppen umfassenden Datensignalzeichen zusammen mit diesen Hochgeschwindigkeits-
Abnehmerleitungen bezeichnenden Adressen bereitstellt,ausgangsseitig an einer Speicheranordnung angeschlossen ist,
welche den Hochgeschwindigkeits-Abnehmerleitungen individuell zugeordnete Speicherplätze jeweils mit einer Mehrzahl von Speicherzellen aufweist,in die jeweils ein oder
mehrere Datensignalzeichen einschreibbar sind, und daß die
einzelnen Speicherplätze der Speicheranordnung für die Weiterleitung der Datensignale an die inFrage kommenden Hochgeschwindigkeits-Abnehmerleitungen in solche aufeinanderfolgende Adressierzyklen einbezogen sind, daß in aufeinanderfolgenden Adressierzyklen Bitgruppen aus den Speicherzellen des jeweiligen Speicherplatzes abgegeben werden.

Die Erfindung bringt den Vorteil eines relativ geringen
schaltungstechnischen Aufwandes mit sich, um unabhängig
von der dynamischen Belastung der Koppeleinrichtung eine
lückenlose Übertragung der Datensignale auf den in Datensignalverbindungen einbezogenen Hochgeschwindigkeits-
Abnehmerleitungen zu ermöglichen. Durch das leitungsindividuelle Zwischenspeichern einer Mehrzahl von Datensignalen in Form von mehrere Bitgruppen umfassenden Datensignalzeichen vor der Weiterleitung dieser Datensignale
in Form von Bitgruppen an die in Frage kommenden Hochgeschwindigkeits-Abnehmerleitungen ist sichergestellt, daß
ständig an diese Hochgeschwindigkeits-Abnehmerleitungen
abzugebende Datensignale in den Abnehmerleitungen zugeordneten Speicherplätzen bereitstehen.

Zweckmäßige Ausgestaltungen der Schaltungsanordnung gemäß
der Erfindung ergeben sich aus den Unteransprüchen.

Anhand von Zeichnungen wird die Erfindung nachstehend beispielsweise näher erläutert.

Fig. 1 zeigt in einem Blockschaltbild eine Schaltungsanordnung, bei der die Erfindung angewandt ist,
Fig. 2 zeigt in einem Blockschaltbild den näheren Aufbau
einer Speicheranordnung gemäß der Erfindung.

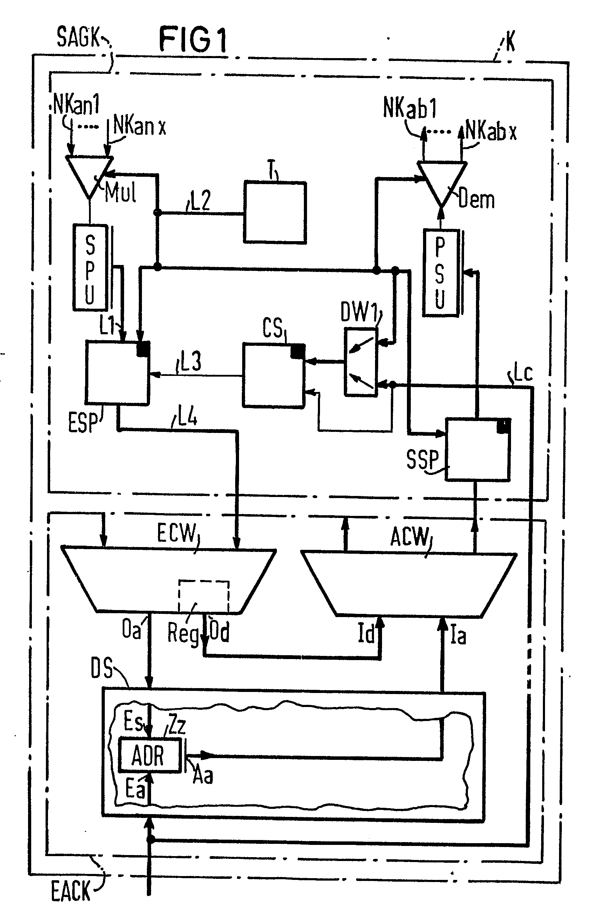

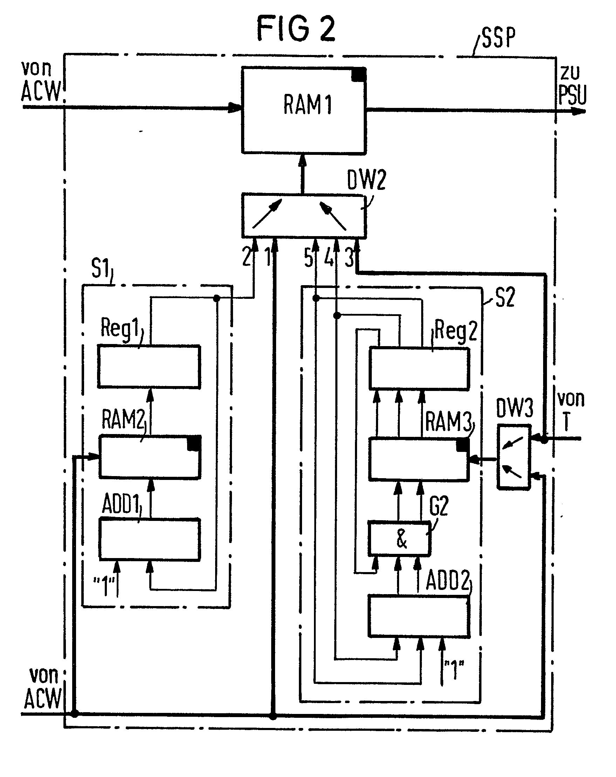

In Fig. 1 ist eine mögliche Realisierungsform einer Koppeleinrichtung K gezeigt, in welcher mit relativ hoher
Geschwindigkeit auf Hochgeschwindigkeits-Zubringerleitungen auftretende Datensignale vermittelbar sind. Die Koppeleinrichtung K enthält eine Verbindungssteuerschaltung
EACK und eine Anschlußschaltung SACK. Die Verbindungssteuerschaltung EACK ist hinsichtlich des Aufbaues des Eingabecodierers ECW mit einem Register Reg und den Anschlüssen Oa, Od, hinsichtlich des Ausgabecodierers ACW mit den
Anschlüssen Ia, Id und hinsichtlich des Durchschaltespeichers DS mit den Zubringerzellen Zz und den Anschlüssen Ea, Es, Aa identisch mit der gleich bezeichneten Verbindungssteuerschaltung gemäß Fig. 2 der europäischen Patentanmeldung O 058 758.

Die Anschlußschaltung SACK umfaßt eine Leitungsabfrageanordnung (Multiplexer) Mul, die eingangsseitig mit Übertragungsleitungen (Hochgeschwindigkeits-Zubringerleitungen)
NKan1 bis NKanx verbunden ist, über die Datensignale mit
der relativ hohen Geschwindigkeit von beispielsweise 64
kbit/s übertragen werden können. Diese Leitungsabfrageanordnung Mul, die zyklisch betrieben wird, ist ausgangsseitig mit dem Eingang eines Serien-Parallel-
Umsetzers SPU verbunden, der im vorliegenden Fall dazu
dient, die der Leitungsabfrageanordnung Mul zugeführten
und von dieser abgegebenen,seriell auftretenden Datensignalbits in ein Parallelformat umzusetzen.Die Umsetzung
erfolgt dabei in der Weise, daß am Ausgang des Serien-
Parallel-Umsetzers SPU jeweils eine aus acht Datensignalbits bestehende Bitgruppe für die weitere Bearbeitung zur Verfügung steht. Eine solche Bitgruppe wird im folgenden auch als Oktett bezeichnet.

Mit den Parallelausgängen des Serien-Parallel-Umsetzers SPU sind über die Leitungsanordnung L1 Dateneingänge einer Speicheranordnung ESP verbunden. Die Leitungsanordnung L1 stellt bei diesem Ausführungsbeispiel entsprechend der zu einer Bitgruppe gehörenden Anzahl von einzelnen Datensignalbits ein System von 8 parallelen Einzelleitungen dar.

Adresseneingänge dieser Speicheranordnung ESP und Steuereingänge der Leitungsabfrageanordnung Mul sind über die Leitungsanordnung L2 mit Ausgängen einer zyklisch arbeitenden Zähleranordnung T verbunden. Die Speicheranordnung ESP ist außerdem mit einem Steuereingang an einem Steuerspeicher CS angeschlossen, in welchem Markierungssignale, beispielsweise in Form einzelner Bits bezüglich derjenigen Übertragungsleitungen NKan1 bis NKanx eingetragen sein können, über die Datensignale zugeführt werden bzw. die in Datensignalverbindungen einbezogen sind.

Mit ihrer Ausgangsseite ist die Speicheranordnung ESP über die Leitungsanordnung L4 mit der Eingangsseite der Verbindungssteuerschaltung EACK verbunden. Die Leitungsanordnung L4 stellt wiederum ein System von Einzelleitungen dar, über welche unter anderem gleichzeitig zwei Oktette (Bitgruppen) zu dem Eingabecodierer ECW hin übertragbar sind.

Wie bereits erwähnt, sind die Leitungsabfrageanordnung Mul und die Speicheranordnung ESP über die Leitungsanordnung L2 mit der Zähleranordnung T verbunden. Über diese Leitungsanordnung L2 werden zyklisch Zählerstände übertragen, die in der Leitungsabfrageanordnung Mul die zyklische Abfrage der Hochgeschwindigkeits-Zubringerleitungen darstellenden Übertragungsleitungen NKan1 bis NKanx steuern. Hierzu ist jeder Hochgeschwindigkeits-Zubringerleitung ein bestimmter Zählerstand zugeordnet. Im vorliegenden Fall sind 128 Hochgeschwindigkeits-Zubringerleitungen an die Leitungsabfrageanordnung Mul angeschlossen. Die den einzelnen Hochgeschwindigkeits-Zubringerleitungen zugeordneten Zählerstände der Zähleranordnung T werden entsprechend der genannten Anzahl auf sieben parallelen Einzelleitungen der Leitungsanordnung L2 bereitgestellt. Die für die einzelnen Hochgeschwindigkeits-Zubringerleitungen bereitgestellten Zählerstände werden im folgenden auch als interne Leitungsnummern bezeichnet. Mit Hilfe dieser internen Leitungsnummern werden gleichzeitig in der Speicheranordnung ESP den einzelnen Hochgeschwindigkeits-Zubringerleitungen zugeordnete Speicherplätze angesteuert, um die von dem Serien-Parallel-Umsetzer SPU bereitgestellten Oktette leitungsindividuell zwischenzuspeichern.

Außerdem dienen die gerade genannten internen Leitungsnummern zur Adressierung des Steuerspeichers CS, in dessen durch die internen Leitungsnummern adressierbaren Speicherplätzen die Datenübertragungszustände kennzeichnende Markierungssignale für die Hochgeschwindigkeits-Zubringerleitungen hinterlegt sind. Die internen Leitungsnummern werden dabei über eine Datenweiche DW1 an diesen Steuerspeicher herangeführt. Die Datenweiche DW1 ist mit einem weiteren Dateneingang über die Leitungsanordnung Lc mit der Verbindungssteuerschaltung EACK verbunden. Die Verbindungssteuerschaltung EACK steuert über diese Leitungsanordnung Lc Schreibzyklen innerhalb des Steuerspeichers CS zur Aktualisierung der den einzelnen Hochgeschwindigkeits-Zubringerleitungen zugeordneten Markierungssignale. Die Leitungsanordnung Lc stellt dabei ein System von Einzelleitungen dar, die Adressensignale zur Adressierung der einzelnen Speicherplätze des Steuerspeichers CS und das jeweils abzuspeichernde aktuelle Markierungssignal führen.

An dem mit der Verbindungssteuerschaltung EACK verbundenen Eingang der Anschlußschaltung SAGK ist eine weitere Speicheranordnung SSP vorgesehen, die in Fig. 2 detaillierter dargestellt ist. Ausgangsseitig ist diese Speicheranordnung mit einem Parallel-Serien-Umsetzer PSU verbunden. Dadurch ist es möglich, die der Verbindungssteuerschaltung EACK von der Anschlußschaltung SAGK zuvor im Parallelformat zugeführten Datensignale wieder in das ursprüngliche Serienformat umzusetzen, bevor die betreffenden Datensignale weitergeleitet werden. Die Weiterleitung der betreffenden Datensignale erfolgt vom Ausgang des Parallel-Serien-Umsetzers PSU über eine Leitungswählschaltung (Demultiplexer) Dem, die ausgangsseitig mit Hochgeschwindigkeits-Abnehmerleitungen NKab1 bis NKabx verbunden ist. In der Speicheranordnung SSP ist wieder jeder an der Leitungswählschaltung Dem angeschlossenen Hochgeschwindigkeits-Abnehmerleitung ein fester Speicherplatz zugeordnet. Das Einschreiben der weiterzuleitenden Datensignale in die in Frage kommenden Speicherplätze wird durch die Verbindungssteuerschaltung EACK gesteuert. Das Auslesen der einzelnen Speicherplätze und das Wirksamschalten der zugehörigen Hochgeschwindigkeits-Abnehmerleitungen wird dagegen von der Zähleranordnung T gesteuert (Leitungsanordnung L2).

Fig. 2 zeigt eine mögliche Ausführungsform der in Fig. 1 schematisch dargestellten Speicheranordnung SSP. Diese Speicheranordnung enthält einen Schreib/Lese-Speicher RAM1, dessen Dateneingänge durch eine aus mehreren Einzelleitungen bestehende Leitungsanordnung mit dem bereits erwähnten Ausgabecodierer ACW (Fig. 1) verbunden sind. Die Anzahl der Einzelleitungen ist bei diesem Ausführungsbeispiel so gewählt, daß jeweils ein aus zwei Oktetten bestehendes Datensignalzeichen über diese Leitungsanordnung parallel übertragen und parallel in den Schreib/Lese-Speicher RAM1 eingeschrieben werden kann.

Innerhalb des Schreib/Lese-Speichers RAM1 ist jeder der an der Koppeleinrichtung K angeschlossenen Hochgeschwindigkeits-Abnehmerleitungen (NKab1 bis NKabx in Fig. 1) ein fester Speicherplatz zugeordnet. Die einzelnen Speicherplätze sind dabei durch den Hochgeschwindigkeits-Abnehmerleitungen zugeordnete Adressen (interne Leitungsnummern) ansteuerbar. Jeder dieser Speicherplätze weist wiederum eine Mehrzahl von Speicherzellen auf, in denen jeweils ein Datensignalzeichen gespeichert werden kann. Bei dem vorliegenden Ausführungsbeispiel sind zwei Speicherzellen pro Speicherplatz vorgesehen. Bei Anschluß von 128 Hochgeschwindigkeits-Abnehmerleitungen an die Koppeleinrichtung K ergibt sich demnach eine Speicherkapazität von 256 x 16 Bits.

Zur Adressierung der einzelnen Speicherzellen innerhalb eines Speicherplatzes im Zuge eines Schreibzyklus bzw. eines Lesezyklus wird für den betrachteten Fall der den jeweiligen Speicherplatz bezeichnenden internen Leitungsnummer ein zusätzliches Adressenbit durch eine erste bzw. zweite Steueranordnung S1 bzw. S2 angefügt. Bei einem Lesezyklus wird nach dem Auslesen eines in der gerade adressierten Speicherzelle gespeicherten Datensignalzeichens lediglich eines der in diesem enthaltenen Oktette für die Weiterleitung an die in Frage kommende Hochgeschwindigkeits-Abnehmerleitung ausgewählt. Dieses ausgewählte Oktett wird dann über eine Leitungsanordnung in paralleler Form dem bereits genannten Parallel-Serien-Umsetzer PSU (Fig. 1) zugeführt. Die Auswahl eines solchen Oktetts erfolgt nun mit Hilfe eines weiteren, von der genannten zweiten Steueranordnung S2 her bereitgestellten Adressenbits in der Weise, daß von Datenausgängen des Schreib/Lese-Speichers RAM 1 nur diejenigen wirksam mit der genannten Leitungsanordnung verbunden werden, die die dem betreffenden Oktett zugehörigen Datensignale führen.

Der gerade betrachtete Schreib/Lese-Speicher RAM1 kann beispielsweise aus mehreren Speicherbausteinen des Typs 93 L 422 der Firma Fairchild aufgebaut werden.

Die zuvor genannten internen Leitungsnummern und die zusätzlichen Adressenbits werden dem Schreib/Lese-Speicher RAM1 über eine Datenweiche DW2 zugeführt. Eingangsseitig weist diese Datenweiche zwei Gruppen von Dateneingängen auf. Eine erste Gruppe von Dateneingängen ist durch eine aus mehreren Einzelleitungen bestehende Leitungsanordnung 1 mit dem Ausgabecodierer ACW (Fig. 1) und durch eine Leitung 2 mit der ersten Steueranordnung S1 verbunden. Diese erste Gruppe von Dateneingängen ist bei einem in dem Schreib/Lese-Speicher RAM1 durchzuführenden Schreibzyklus wirksam geschaltet.

Eine zweite Gruppe von Dateneingängen der Datenweiche DW2 ist durch eine aus mehreren Einzelleitungen bestehende Leitungsanordnung 3 mit der Zähleranordnung T (Fig. 1) und durch die Leitungen 4 und 5 mit der zweiten Steueranordnung S2 verbunden. Diese Gruppe von Dateneingängen ist bei einem in dem Schreib/Lese-Speicher RAM1 durchzuführenden Lesezyklus wirksam geschaltet.

Die bereits oben erwähnte Steueranordnung S1 hat die Aufgabe, bei in dem Schreib/Lese-Speicher RAM1 durchzuführenden Schreibzyklen jeweils ein zusätzliches Adressenbit zur Verfügung zu stellen, welches zusammen mit der gerade von dem Ausgabecodierer ACW auf der Leitungsanordnung 1 bereitgestellten internen Leitungsnummer eine für die Aufnahme eines Daten- signalzeichens bereitstehende Speicherzelle innerhalb eines Speicherplatzes des Schreib/Lese-Speichers RAM1 bezeichnet. Die Steueranordnung S1 enthält dazu einen

**0100534**

als Schreib/Lese-Speicher ausgelegten Adressenspeicher RAM2 mit den Hochgeschwindigkeits-Abnehmerleitungen zugeordneten Speicherplätzen, in denen jeweils ein solches Adressenbit gespeichert ist. Zur Ansteuerung dieser Speicherplätze ist der Adressenspeicher RAM2 mit seinen Adresseneingängen durch die Leitungsanordnung 1 mit dem Ausgabecodierer ACW verbunden. Bei einem in dem Schreib/Lese-Speicher RAM1 durchzuführenden Schreibzyklus wird der durch die gerade auf der Leitungsanordnung 1 auftretende interne Leitungsnummer angesteuerte Speicherplatz des Adressenspeichers RAM2 ausgelesen und das darin gespeicherte Adressenbit wird von einem Datenausgang abgegeben. Dieser Datenausgang ist mit dem Eingang eines Registers Reg verbunden, in das das betreffende Adressenbit übernommen wird. Ausgangsseitig ist dieses Register über die Leitung 2 mit der Datenweiche DW2 und mit einem Eingang eines Addierers ADD1 verbunden. Dieser Addierer inkrementiert die in dem Register Reg1 enthaltene Adresse (Adressenbit) und stellt die daraus resultierende Adresse an seinem Ausgang zur Verfügung. Da bei dem vorliegenden Ausführungsbeispiel von der Steueranordnung S1 als Adresse lediglich ein zusätzliches Adressenbit zur Verfügung gestellt wird, kann der Addierer ADD1 durch eine Inverterstufe gebildet sein. Ausgangsseitig ist dieser Addierer mit einem Dateneingang des Adressenspeichers RAM2 verbunden. Die damit an diesem Dateneingang anliegende inkrementierte Adresse wird sofort nach der Übernahme der bis dahin aktuellen Adresse in das Register Reg1 in den in Frage kommenden Speicherplatz des Adressenspeichers RAM2 eingeschrieben. Die bis dahin in diesem Speicherplatz gespeicherte Adresse wird dabei überschrieben.

Die bereits oben erwähnte Steueranordnung S2 hat die Aufgabe, bei einem in dem Schreib/Lese-Speicher RAM1 durchzuführenden Lesezyklus eine Adresse zur Verfügung zu stellen, welche zusammen mit der gerade im Zuge eines Adressierzyklus von der Zähleranordnung T (Fig. 1) bereitgestellten internen Leitungsnummer innerhalb des in Frage kommenden Speicherplatzes des Schreib/Lese-Speichers RAM1 eine Speicherzelle und damit ein für die Weiterleitung an die in Frage kommende HochgeschwindigkeitsAbnehmerleitung bereitstehendes Oktett bezeichnet. Hierzu enthält die Steueranordnung S2 einen als Schreib/Lese-Speicher ausgelegten Adressenspeicher RAM3 mit den Hochgeschwindigkeits-Abnehmerleitungen individuell zugeordneten Speicherplätzen, in denen jeweils eine solche Adresse gespeichert ist. Da bei dem hier vorliegenden Ausführungsbeispiel in jedem der Speicherplätze des Schreib/Lese-Speichers RAM1 zwei Datensignalzeichen und damit vier Oktette gespeichert sein können, wird die gerade erwähnte Adresse durch zwei Adressenbits gebildet. In jedem der Speicherplätze des Adressenspeichers RAM3 ist zusätzlich zu diesen Adressenbits ein weiteres, im folgenden als Zählbit bezeichnetes Bit einschreibbar. Dieses Zählbit, auf das im folgenden noch näher eingegangen wird, steuert die Aktualisierung dieser Adressenbits. Zur Ansteuerung der einzelnen Speicherplätze ist der Adressenspeicher RAM3 mit seinen Adresseneingängen mit einem Ausgang einer Datenweiche DW3 verbunden. Diese Datenweiche DW3 weist zwei Gruppen von Dateneingängen auf, wobei eine Gruppe durch eine Leitungsanordnung mit dem Ausgabecodierer ACW und die andere Gruppe durch eine Leitungsanordnung mit der Zähleranordnung T verbunden ist. Bei einem in dem Schreib/Lese-Speicher RAM1 durchzuführenden Lesezyklus wird der durch die gerade im Zuge eines Adressierzyklus von der Zähleranordnung T bereitgestellte interne Leitungsnummer bezeichnete Speicherplatz des Adressenspeichers RAM3 ausgelesen und der Inhalt dieses Speicherplatzes wird von drei Datenausgängen abgegeben.

Die gerade erwähnten Datenausgänge des Adressenspeichers RAM3 sind mit Eingängen eines für die Aufnahme der von den Datenausgängen des Adressenspeichers RAM3 abgegebenen Speicherinhalte dienenden Registers Reg 2 verbunden. Dieses Register, das entsprechend der ihm zugeführten Signale drei Ausgänge aufweist, ist mit den die Adressenbits führenden Ausgängen durch die Leitungen 4 und 5 mit der Datenweiche DW2 und mit Eingängen eines Addierers ADD2 verbunden. Der das Zählbit führende Ausgang des Registers Reg2 ist an einen Steuereingang einer Freigabeeinrichtung G2 angeschlossen.

Der Addierer ADD2, dem an einem weiteren Eingang ein logischer Pegel "1" zugeführt wird, inkrementiert die ihm in Form von zwei Adressenbits von dem Register Reg2 her jeweils zugeführte Adresse und führt die daraus resultierende neue Adresse weiteren Eingängen der Freigabeeinrichtung G2 zu. Diese Freigabeeinrichtung, die ausgangsseitig durch zwei Leitungen mit Dateneingängen des Adressenspeichers RAM3 verbunden ist, leitet die ihr von dem Addierer ADD2 zugeführte Adresse (zwei Adressenbits) an den Adressenspeicher RAM3 weiter, wenn das Zählbit auf einen logischen Pegel "0" gesetzt ist. Bei Vorliegen eines logischen Pegels "1" des Zählbits wird dagegen eine Adresse weitergeleitet, die der bis dahin in dem Register Reg2 gespeicherten Adresse entspricht. Die von der Freigabeeinrichtung G2 jeweils abgegebene Adresse wird nach der zuvor erwähnten Übernahme der Adressenbits in das Register Reg2 in den in Frage kommenden Speicherplatz des Adressenspeichers RAM3 eingeschrieben. Die bis dahin dort gespeicherte Adresse wird damit überschrieben.

Die gerade genannte Freigabeeinrichtung G2 kann beispielsweise aus zwei ODER-Gliedern mit jeweils zwei Eingängen bestehen, wobei dem jeweils einen Eingang eines der Adressenbits und dem jeweils anderen Eingang das Zählbit zugeführt wird. Für den Adressenspeicher RAM3 und für den Adressenspeicher RAM2 der Steueranordnung S1 können handelsübliche Speicherbausteine verwendet werden. Als Addierer ADD2 kann beispielsweise der Baustein SN 7482 der Fa.

Texas Instruments verwendet werden. Schließlich können die Datenweichen DW2 und DW3 durch mehrere Bausteine des Typs SN 74157 der Firma Texas Instruments realisiert werden.

Im übrigen kann das Einschreiben der von dem Addierer ADDR2 jeweils abgegebenen Adressenbits in den Adressenspeicher RAM3 auch in der Weise gesteuert werden, daß dem Adressenspeicher RAM3 lediglich dann ein Taktsignal für das Einschreiben der Adressenbits zugeführt wird, wenn das zugehörige Zählbit auf den logischen Pegel "0" gesetzt ist. Hierzu können beispielsweise das Zählbit und dasTaktsignal durch ein ODER-Glied logisch verknüpft werden. Bei Vorliegen eines logischen Pegels "1" des zugehörigen Zählbits bleiben die bis dahin in dem Adressenspeicher RAM3 gespeicherten Adressenbits unverändert erhalten. Bei dieser Art der Steuerung sind die Ausgänge des Addierers ADD2 direkt mit den Dateneingängen des Adressenspeichers verbunden.

Nachdem zuvor der Aufbau der in Fig. 1 und 2 dargestellten Schaltungsanordnungen erläutert worden ist, wird nunmehr auf die Arbeitsweisen dieser Schaltungsanordnungen eingegangen. Hierzu sei angenommen, daß beispielsweise eine Verbindung zwischen der Hochgeschwindigkeits-Zubringerleitung NKan1 und der Hochgeschwindigkeits-Abnehmerleitung NKabx (Fig. 1) aufzubauen ist. Beide Leitungen befinden sich dabei zunächst im Ruhezustand. In diesen Ruhezustand kann jede der an der Koppeleinrichtung K angeschlossenen Hochgeschwindigkeits-Zubringerleitungen und Hochgeschwindigkeits-Abnehmerleitungen durch einen von der zugehörigen Zeitvielfach-Datenvermittlungsanlage her abgegebenen speziellen Befehl (Auslösebefehl) überführt werden. Ein solcher Auslösebefehl hat für den hier betrachteten Fall zur Folge, daß für die Hochgeschwindigkeits-Zubringerleitung NKan1 ein diesen Ruhezustand bezeichnendes Markierungsbit "0"in den Steuerspeicher CS eingetragen wird. Die dazu erforderlichen Steuersignale werden über die Leitungsanordnung Lc und über die Datenweiche DW1 zu dem Steuerspeicher CS hin übertragen.

Die bei der zyklischen Abfrage (Adressierzyklus) der einzelnen Hochgeschwindigkeits-Zubringerleitungen von der Leitungsabfrageanordnung Mul für die Hochgeschwindigkeits-Zubringerleitung NKan1 aufgenommenen Datensignale werden, wie bereits oben erwähnt, durch den Serien-Parallel-Umsetzer SPU in parallele Bitgruppen (Oktette) umgesetzt.

Die Auswahl der Hochgeschwindigkeits-Zubringerleitung NKan1 erfolgt dabei durch die von der Zähleranordnung T abgegebene interne Leitungsnummer "1". Diese interne Leitungsnummer "1" wird der nachgeschalteten Speicheranordnung ESP zur Adressierung des zugehörigen Speicherplatzes bereitgestellt. Aufgrund des den Ruhezustand bezeichnenden Markierungsbits werden jedoch die für die Hochgeschwindigkeits-Zubringerleitung NKan1 an die Speicheranordnung ESP abgegebenen Oktette nicht bearbeitet.

Ein für die Hochgeschwindigkeits-Abnehmerleitung NKabx abgegebener Auslösebefehl bewirkt, daß das unter der Adresse "X" in dem Adressenspeicher RAM2 gespeicherte Adressenbit auf den logischen Pegel "0" und die Adressenbits sowie das Zählbit unter der gleichen Adresse in dem Adressenspeicher RAM3 auf den logischen Pegel "1" gesetzt werden. Außerdem wird unter der Adresse "X" in die Speicherzelle "1" des Schreib/Lese-Speichers RAM1 ein Datensignalzeichen eingetragen, dessen einzelne Datenbits ein fest vorgegebenes Muster (Ruhemuster) darstellen. Die Ansteuerung der genannten Speicher erfolgt dabei in hier nicht näher dargestellter Weise durch die Verbindungssteuerschaltung EACK (Fig. 1).

Wird nun im Zuge eines Adressierzyklus von der Zähleranordnung T die interne Leitungsnummer "X" bereitgestellt, so wird zunächst der durch diese Adresse bezeichnete Speicherplatz des Adressenspeichers RAM3 angesteuert und der Inhalt dieses Speicherplatzes ausgelesen. Dieser Speicherinhalt (ein Zählbit und zwei Adressenbits) wird dann in das Register Reg2 übernommen. Mit diesen Adressenbits, die bei dem hier zunächst betrachteten Ruhezustand jeweils auf den logischen Pegel "1" gesetzt sind, und der internen Leitungsnummer "X" wird über die Datenweiche DW2 der Schreib/Lese-Speicher RAM1 angesteuert. Im Zuge eines sich anschließenden Lesezyklus in dem Schreib/Lese-Speicher RAM1 wird dann zunächst mit Hilfe eines der Adressenbits und der internen Leitungsnummer "X" die Speicherzelle "1" des Speicherplatzes "X" ausgelesen. Diese Speicherzelle enthält das mit dem Auslösebefehl eingetragene Datensignalzeichen. Mit dem verbleibenden zweiten Adressenbit wird anschließend eines der in dem Datensigalzeichen enthaltenen Oktette ausgewählt und an den Parallel-Serien-Umsetzer PSU weitergeleitet.Für den hier zunächst betrachteten Fall handelt es sich um das Oktett "1". Dieses Oktett wird in den Parallel-Serien-Umsetzer PSU in eine serielle Form umgewandelt und in dieser seriellen Form über die Leitungswählschaltung Dem an die Hochgeschwindigkeits-Abnehmerleitung NKabx weitergeleitet.

Nach der zuvor erwähnten Übernahme der Adressenbits in das Register Reg2 wird in dem Adressenspeicher RAM3 ein Schreibzyklus durchgeführt, um in den durch die interne Leitungsnummer "X" bezeichneten Speicherplatz die Adresse des beim nächsten Adressierzyklus zu übertragenden Oktetts einzutragen. Da im Ruhezustand der Hochgeschwindigkeits-Abnehmerleitung NKabx das zugehörige Zählbit auf den logischen Pegel "1" gesetzt ist,gibt die Freigabeeinrichtung G2 eine feste Adresse ab, bei der beide Adressenbits auf den logischen Pegel "1" gesetzt sind.Dies hat zur Folge, daß die bisher in dem Speicherplatz "X" des Adressenspeichers RAM3 gespeicherte Adresse (Adressenbits) unverändert bestehen bleibt. Da sich die gerade dargestellten Abläufe auch in den nachfolgenden Adressierzyklen wiederholen, wird in der Folge ständig dasselbe Oktett aus dem Schreib/Lese-Speicher RAM1 ausgelesen und an die Hochgeschwindigkeits-Abnehmerleitung NKabx weitergeleitet.

Es wird nun noch der Fall betrachtet, daß zwischen der Hochgeschwindigkeits-Zubringerleitung NKan1 und der Hochgeschwindigkeits-Abnehmerleitung NKabx eine Datenverbindung besteht (Verbindungszustand). In diesen Verbindungszustand werden die beiden betrachteten Leitungen durch einen von der zugehörigen Zeitvielfach-Datenvermittlungsanlage her abgegebenen Durchschaltebefehl überführt. Dieser Durchschaltebefehl bewirkt, daß in die der Hochgeschwindigkeits-Zubringerleitung NKan1 zugehörige Zubringerzelle Zz des Durchschaltespeichers DS die Adresse der Hochgeschwindigkeits-Abnehmerleitung NKabx (interne Leitungsnummer "X") eingetragen wird. Mit dem Eintragen dieser Adresse wird auch durch ein Steuersignal auf der Leitungsanordnung Lc ein entsprechender Eintrag in den Steuerspeicher CS vorgenommen. Dieser Eintrag erfolgt in Form eines Markierungsbits "1", welches den Verbindungszustand der Hochgeschwindigkeits-Zubringerleitung NKan1 anzeigt.

Die im folgenden auf der Hochgeschwindigkeits-Zubringerleitung NKan1 auftretenden Datensignale werden, wie bereits oben erwähnt, von der Leitungsabfrageanordnung Mul aufgenommen und durch den Serien-Parallel-Umsetzer SPU in parallele Bitgruppen (Oktette) umgesetzt. Da die Hochgeschwindigkeits-Zubringerleitung NKan1 sich nunmehr im Verbindungszustand befindet (Markierungsbit "1"im Steuerspeicher CS), werden die von dem Serien-Parallel-Umsetzer SPU abgegebenen Oktette in die Speicheranordnung ESP übernommen und hier zu Datensignalzeichen (zwei Oktette) zusammengefaßt. Liegt ein solches Datensignalzeichen vor, so wird dieses zusammen mit der internen Leitungsnummer "1" für die weitere Bearbeitung von dem Eingabecodierer ECW übernommen. Wie bereits im Hauptpatent erläutert worden ist, wird anhand der dem Datensignalzeichen zugefügten internen Leitungsnummer, hier die interne Leitungsnummer "1", die interne Leitungsnummer der zugehörigen Hochgeschwindigkeits-Abnehmerleitung ermittelt. Im vorliegenden Fall handelt es sich um die interne Leitungsnummer "X". Diese interne Leitungsnummer "X" wird dann zusammen mit dem von dem Eingabecodierer ECW aufgenommenen Datensignalzeichen dem Ausgabecodierer ACW zugeführt. Dieser leitet dann die ihm zuzugeführten Informationen (Datensignalzeichen und interne Leitungsnummer) an die Speicheranordnung SSP weiter.

In der Speicheranordnung SSP (Fig. 2) wird nun zunächst anhand der internen Leitungsnummer "X" das unter dieser Leitungsnummer in dem Adressenspeicher RAM2 gespeicherte Adressenbit ausgelesen und in das Register Reg1 übertragen. Dieses Adressenbit möge dabei beispielsweise auf den logischen Pegel "0" gesetzt sein. Das auf diese Weise in das Register Reg1 übertragene Adressenbit wird zusammen mit der internen Leitungsnummer "X" über die Datenweiche DW2 dem Schreib/Lese-Speicher RAM1 zugeführt, um innerhalb des durch die interne Leitungsnummer "X" bezeichneten Speicherplatzes die für die Aufnahme des anstehenden Datensignalzeichens bereitstehende Speicherzelle anzusteuern. In diesem Fall wird durch das bereitgestellte Adressenbit die Speicherzelle "0" angesteuert. Die Datenweiche DW2 ist im übrigen durch ein Steuersignal für die genannten Adressensignale wirksam geschaltet. In einem sich anschließenden Schreibzyklus innerhalb des Schreib/Lese-Speichers RAM1 wird das anstehende Datensignalzeichen in die durch das Adressenbit bezeichnete Speicherzelle "0 " eingeschrieben.

Nach der gerade erwähnten Übernahme des Adressenbits in das Register Reg1 wird der Adressenspeicher RAM2 zur Durchführung eines Schreibzyklus erneut angesteuert, um in seinem durch die interne Leitungsnummer "X" bezeichneten Speicherplatz eine Adresse (Adressenbit) einzutragen, die die für die Aufnahme eines weiteres Datensignalzeichens bereitstehende Speicherzelle des Schreib/Lese-Speichers RAM1 angibt.Diese Adresse (Adressenbit) bildet der Addierer ADD1 durch Inkrementieren der im Register Reg1 enthaltenen Adresse. Da es sich bei dieser Adresse lediglich um ein einziges Adressenbit handelt, entspricht das Inkrementieren einem Invertieren des logischen Pegels des in dem Register Reg1 enthaltenen Adressenbits. Bei dem hier betrachteten Beispiel wird demzufolge ein logischer Pegel "1" in den Adressenspeicher eingetragen.

Außerdem wird der Adressenspeicher RAM3 zur Durchführung eines Schreibzyklus angesteuert, um das in seinem durch die interne Leitungsnummer "X" bezeichneten Speicherplatz gespeicherte Zählbit auf den logischen Pegel "O" zu setzen. Die Datenweiche DW3 ist hierzu entsprechend geschaltet.

Die gerade erläuterten Abläufe innerhalb der Speicheranordnung SSP wiederholen sich entsprechend bei Eintreffen weiterer Datensignalzeichen. Dabei können, wie bereits oben erwähnt, abhängig von der Laufzeit der Datensignalzeichen innerhalb der Koppeleinrichtung K maximal zwei Datensignalzeichen in dem betrachteten Speicherplatz des Schreib/Lese-Speichers RAM1 gespeichert sein.

Wird nun im Zuge eines sämtliche internen Leitungsnummern umfassenden Adressierzyklus die interne Leitungsnummer "X" der Hochgeschwindigkeits-Abnehmerleitung NKabx der Speicheranordnung SSP zugeführt, so laufen den Vorgängen im Ruhezustand entsprechende Vorgänge ab, allerdings mit dem Unterschied, daß nunmehr in den Adressenspeicher RAM3 eine Adresse eingetragen wird, die das dem gerade ausgewählten Oktett nachfolgende Oktett bezeichnet. Diese Adresse, die der Addierer ADD2 durch Inkrementieren der in dem zugehörigen Register Reg2 enthaltenen Adresse bildet, wird dem Adressenspeicher RAM3 über die Freigabeeinrichtung G2 zugeführt. Die Freigabeeinrichtung G2 ist hierfür durch den logischen Pegel "0" des zugehörigen Zählbits wirksam geschaltet.

Auch die zuletzt dargestellten Abläufe wiederholen sich in aufeinanderfolgenden Adressierzyklen, so daß bei diesem Ausführungsbeispiel nach vier aufeinanderfolgenden Adressierzyklen jedes der in dem betrachteten Speicherplatz gespeicherten Oktette einmal ausgelesen worden ist.

Bezüglich der vorstehend dargestellten Vorgänge innerhalb der Speicheranordnung SSP sei hier noch angemerkt, daß innerhalb eines sämtliche internen Leitungsnummern umfassenden Adressierzyklus für die Bearbeitung der einzelnen internen Leitungnummern ein fest vorgegebenes Zeitintervall zur Verfügung steht. Zu Beginn eines solchen Zeitintervalls wird zunächst überprüft, ob am Ausgang des Ausgabecodierers ACW ein weiterzuleitendes Datensignalzeichen vorliegt. Ist dies der Fall, so wird zunächst dieses Datensignalzeichen in den Schreib/Lese-Speicher RAM1 eingeschrieben. Anschließend wird dann das jeweils in Frage kommende Oktett aus dem Schreib/Lese-Speicher RAM1 ausgelesen und an die zugehörige Hochgeschwindigkeits-Zubringerleitung weitergeleitet.

Handelt es sich bei einem solchen am Ausgang des Ausgabecodierers ACW bereitgestellten Datensignalzeichen um das erste Datensignalzeichen nach dem Übergang der zugehörigen Hochgeschwindigkeits-Abnehmerleitung in den Verbindungszustand, so wird dieses Datensignalzeichen entsprechend dem für diese Hochgeschwindigkeits-Abnehmerleitung im Ruhezustand in den Adressenspeicher RAM2 eingetragenen Adressenbit (logischer Pegel "0") in die Speicherzelle "0" des zugehörigen Speicherplatzes des Schreib/Lese-Speichers RAM1 eingetragen. Mit dem Bereitstellen der internen Leitungsnummer dieser Hochgeschwindigkeits-Abnehmerleitung im Zuge eines Adressierzyklus wird zunächst noch einmal das durch die Adres-

0100534

senbits in dem Adressenspeicher RAM3 bezeichnete, das Ruhemuster darstellende Oktett ausgelesen. Diese Adressenbits sind vom Ruhezustand her noch auf den logischen Pegel "1" gesetzt und bezeichnen somit das Oktett "1" der Speicherzelle "1" des betreffenden Speicherplatzes in dem Schreib/Lese-Speicher RAM1. Erst im Zuge des nachfolgenden Adressierzyklus wird dann das erste Oktett (Oktett "0") des in die Speicherzelle "0" zuvor eingetragenen Datensignalzeichens aufgrund der nunmehr inkrementierten Adressenbits in dem Adressenspeicher RAM3 ausgelesen und an die zugehörige Hochgeschwindigkeits-Abnehmerleitung weitergeleitet.

Durch das gerade erläuterte, um ein Oktett verzögerte Weiterleiten des ersten Datensignalzeichens nach dem Übergang der zugehörigen Hochgeschwindigkeits-Abnehmerleitung in den Verbindungszustand und durch das Zwischenspeichern der diesen Datensignalen nachfolgenden Datensignalzeichen ist sichergestellt, daß die ursprünglich der Koppeleinrichtung K zugeführten Datensignale unabhängig von ihrer durch die dynamische Belastung der Koppeleinrichtung bedingten Laufzeit lückenlos übertragen werden.

4 Patentansprüche
2 Figuren

Patentansprüche

1. Schaltungsanordnung zur Aufnahme von auf Hochgeschwin-digkeits-Zubringerleitungen (NKan1 bis NKanx) auftretenden Datensignalen und Weiterleitung dieser Datensignale über Hochgeschwindigkeits-Abnehmerleitungen (NKab1 bis NKabx) in einem wenigstens eine Zeitvielfach-Datenvermittlungsanlage umfassenden Datenvermittlungsnetz, in welchem jeder Zeitvielfach-Datenvermittlungsanlage eine gesonderte, von dieser Datenvermittlungsanlage her steuerbare Koppeleinrichtung (K) zugehörig ist, über die die genannten Datensignale vermittelt werden, wobei die Koppeleinrichtung (K) einen Durchschaltespeicher (DS) mit den Hochgeschwin-digkeits-Zubringerleitungen individuell zugeordneten Spei-cherplätzen aufweist, in denen von der Zeitvielfach-Datenvermittlungsanlage her Adressen der in Frage kommenden Hochgeschwindigkeits-Abnehmerleitungen für die Weiterleitung der genannten Datensignale bereitgestellt werden, und wobei der Durchschaltespeicher zum Adressieren seiner Speicherplätze und zum Wirksamschalten der in Frage kommenden Hochgeschwindigkeits-Abnehmerleitungen eingangsseitig mit einem Eingabecodierer (ECW) und ausgangsseitig mit einem Ausgabe-codierer (ACW) verbunden ist,

d a d u r c h   g e k e n n ⌣ z e i c h n e t , daß der Ausgabecodierer (ACW), der die an Hochgeschwindigkeits-Abnehmerleitungen (NKab1 bis NKabx) weiterzuleitenden Da-tensignale in Form von mehrere Bitgruppen umfassenden Datensignalzeichen zusammen mit diesen Hochgeschwindigkeits-Abnehmerleitungen bezeichnenden Adressen bereitstellt, ausgangsseitig an einer Speicheranordnung (SSP) angeschlossen ist, welche den Hochgeschwindigkeits- Abnehmerleitungen individuell zugeordnete Speicherplätze jeweils mit einer Mehrzahl von Speicherzellen aufweist, in die jeweils ein odermehrere Datensignalzeichen einschreibbar sind, und daß die einzelnen Speicherplätze der Speicheranordnung (SSP) für die Weiterleitung der Datensignale an die in Frage kommenden Hochgeschwindigkeits-Abnehmerleitungen in solche aufeinanderfolgende Adressierzyklen einbezogen sind, daß in aufeinanderfolgenden Adressierzyklen Bitgruppen aus den Speicherzellen des jeweiligen Speicherplatzes abgegeben werden.

2. Schaltungsanordnung nach Anspruch 1, d a d u r c h g e k e n n z e i c h n e t , daß die Speicheranordnung (SSP) einen Schreib/Lese-Speicher (RAM1) für die Aufnahme der mehrere Bitgruppen umfassenden Datensignalzeichen enthält,
daß mit dem Schreib/Lese-Speicher (RAM1) eine erste Steueranordnung (S1) verbunden ist, die anhand der zusammen mit dem jeweiligen Datensignalzeichen auftretenden Adresse den jeweils zugehörigen Speicherplatz des Schreib/Lese-Speichers (RAM1) und innerhalb dessen eine für die Aufnahme des jeweiligen Datensignalzeichens bereitstehende Speicherzelle ansteuert,
und daß mit dem Schreib/Lese-Speicher (RAM1) eine zweite Steueranordnung (S2) verbunden ist, die anhand der im Zuge eines Adressierzyklus bereitgestellten Adressen von den durch diese Adressen bezeichneten Speicherplätzen jeweils eine Speicherzelle ansteuert, die eine zur Weiterleitung anstehende Bitgruppe enthält.

3. Schaltungsanordnung nach Anspruch 2, d a d u r c h g e k e n n z e i c h n e t , daß der ersten Steueranordnung (S1) und der zweiten Steueranordnung (S2) jeweils ein Adressenspeicher (RAM2, RAM3) mit den Hochgeschwindigkeits-Abnehmerleitungen individuell zugeordneten Speicherplätzen zugehörig ist, die durch die zusammen mit den Datensignalzeichen auftretenden Adressen bzw. durch im Zuge eines Adressierzyklus bereitgestellte gesonderte Adressen angesteuert werden und in denen jeweils die Adresse derjenigen Speicherzelle des durch die betreffende Adresse bezeichneten Speicherplatzes des Schreib/Lese-Speichers (RAM1) gespeichert ist, die für die Aufnahme eines Datensignalzeichens bereitsteht bzw. die zur Weiterleitung anstehende Bitgruppen enthält,

daß der jeweilige Adressenspeicher (RAM2, RAM3) ausgangsseitig mit einem für die Aufnahme der von dem Adressenspeicher abgegebenen Adresse dienenden Register (Reg1, Reg2) verbunden ist, an dessen Ausgang die betreffende Adresse gleichzeitig mit der den zugehörigen Speicherplatz bezeichnenden Adresse zur Ansteuerung des Schreib/Lese-Speichers (RAM1) bereitsteht,

und daß die erste Steueranordnung (S1) und die zweite Steueranordnung (S2) jeweils einen Addierer (ADD1, ADD2) enthalten, der nach jeder Ansteuerung des Schreib/Lese-Speichers (RAM1) die bis dahin in dem zugehörigen Register (Reg1, Reg2) enthaltene Adresse inkrementiert und die daraus resultierende Adresse zum Einschreiben in den in Frage kommenden Speicherplatz des zugehörigen Adressenspeichers (RAM2, RAM3) zur Verfügung stellt.

4. Schaltungsanordnung nach Anspruch 3, d a d u r c h g e k e n n z e i c h n e t , daß die zweite Steueranordnung eine Freigabeeinrichtung (G2) enthält, die lediglich dann das Einschreiben der vom Ausgang des zugehörigen Addierers (ADD2) abgegebenen Adresse in den in Frage kommenden Speicherplatz des zugehörigen Adressenspeichers (RAM3) ermöglicht, wenn zuvor in den zugehörigen Speicherplatz Schreib/Lese-Speichers (RAM1) ein zur Weiterleitung bestimmtes Datensignalzeichen eingeschrieben worden ist.

# FIG 1

# FIG 2